# EUROPEAN PATENT APPLICATION

(11) **EP 2 447 787 A1**
(43) Date of publication of application: **02.05.2012**
(21) Application number: 10275112.0
(22) Date of filing: 27.10.2010
(51) Int. Cl.: G03H 1/22, G02B 27/01

(54) **Holographic projection apparatus**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

The present invention relates to a projection apparatus (10) for use in a display unit, including: a holographic Spatial Light Modulator (SLM) (12) for receiving holographic data (14) from a digital signal processor (1)6 and generating a hologram by modulating the phase of light in accordance with said holographic data; a substantially coherent light source (18) for illuminating the holographic SLM (12) for generating image bearing light (20); a secondary SLM (24) arranged, in one operating mode, to be illuminated by the image bearing light (20) for spatially filtering said image bearing light for improving contrast of a final image to be projected to a viewer; and an optical switch (22) which is operable to bypass the secondary SLM so that in one operating condition of the switch, light is filtered by the secondary SLM and in a second condition of the switch, light is not filtered by the secondary SLM.

## Description

### Field of the Invention

The present invention relates to projection apparatus suitable for use in a display unit such as a head up display, a helmet mounted display or a head mounted display.

### Background of the Invention

An avionics display unit for an aircraft may consist of four main subsystems. These are an electronics subsystem, which may include a digital signal processor, a projection apparatus, an injection or relay optics subsystem and one or more waveguides. The electronics subsystem provides the electrical power handling and image generation. The projection apparatus converts the electrical signals provided by the electronic subsystem into an optical image which is propagated into the injection optics subsystem. The injection optics subsystem translates the near field image formed by the projector into a far field image. This image is then injected into the waveguides. The waveguides transmit the resulting image into a format that can be viewed or read by a pilot as an overlay to the pilot's normal vision outside of the helmet or cockpit.

The present invention is concerned with projection apparatus which may be used for example in an avionics display unit.

Known projection apparatus consists of a laser, optical elements, such as mirrors, and an optical Fourier processor. For certain optical arrangements the relationship between an image and its hologram is such that the image is the Fourier transform of the hologram. Thus it is possible to define a desired image, for example symbols for a display and to compute the inverse Fourier transform of the desired image to determine a hologram. If the hologram is then prepared and introduced into an appropriate display system the desired image will then be displayed for viewing by an observer. Fourier generators, or processors, are described in WO2005/05988 and W02005/059660. The Fourier projector may comprise a Liquid Crystal on Silicon display (LCOS) or Spatial Light Modulator (SLM).

An LCOS has a field of addressable phase modulating elements often referred to as pixels. The LCOS takes the electrical signal from a digital image processor and converts the image into an optical hologram. The hologram is then subsequently processed by static optical elements (lenses) into an image. The hologram formed by the LCOS can be altered via the electronic subsystem for generating various different types of images which will be discussed in greater detail below.

An advantage of this form of holographic image generation is that all the available light from a laser can be used for generating the image. In a conventional projector the power is shared equally between each pixel regardless of whether it is used in the image or not. This means the image brightness is fixed regardless of the amount of pixels used on the display.

In an LCOS system the laser power is shared between only the pixels that are in an 'on' state that contribute to forming the image. In cases where only a few percent of the pixels are used in the image on the display this results in a large optical 'gain' where the power is more efficiently used and hence the laser power can be reduced.

Although a large amount of optical gain is created the limitations of the LCOS device also produce a significant amount of background noise. This background noise severely limits the contrast level of the overall display in some cases to as low as 10:1 which is not normally acceptable in head up displays.

### Summary of the Invention

According to the present invention there is provided projection apparatus for use in a display unit, including: a holographic projector for receiving image data from a digital image processor and generating a hologram for modulating the phase of light in accordance with said image data; a substantially coherent light source for illuminating the holographic projector for generating image bearing light; a secondary projector arranged to be illuminated by the image bearing light for filtering said image bearing light for improving contrast in a final image to be projected to a viewer; and an optical switch which is operable to bypass the secondary projector so that in one condition of the switch light is filtered by the secondary projector and in a second condition of the switch light is not filtered by the secondary projector.

The secondary projector not only preserves the optical gain but also offers high contrast and resolution as compared to prior art systems.

The apparatus may comprise switch control unit and an ambient light sensor, wherein said control unit is operably connected to the sensor for receiving from the sensor data according to the ambient light, and controlling the optical switch to selectively bypass the secondary projector dependent on the sensed ambient light.

In high ambient light conditions for example when an aircraft is flying above clouds in full sunlight, a pilot may not perceive the background noise generated by use of a Fourier projector. Accordingly, the second projector can be switched "out" or bypassed because it is not required to increases image contrast. Further, the second projector decreases brightness, and therefore by bypassing it the brightness of the image is not reduced so the image is still clearly visible during high ambient lighting conditions. At low ambient light conditions, for example during night time flying, the background noise is more visible whilst brightness of an image is less critical. In this case better contrast is obtained by switching "in" the second projector so that contrast is increased even though brightness may be decreased. This embodiment reduces the loss of the system and permits high raster brightness comparable to that when a standalone Fourier projector is used.

The apparatus may comprise a switch control unit configured for receiving data according to whether a cursive or raster image is being displayed, and controlling the optical switch to selectively bypass the secondary projector during cursive operation and raster operation.

Cursive and raster operation are described in more detail below. Briefly, cursive operation involves the display of information to a viewer such as height, heading or target information. Only a relatively small percentage of a display is illuminated during cursive operation and therefore the holographic display provides a large optical gain compared to other systems. Accordingly, even though the secondary projector reduces brightness, this is not considered to be a significant problem. Raster operation involves the display of video images to a viewer which may require a relatively large percentage of a display to be illuminated. Accordingly, the optical gain provided by a holographic projector is less pronounced. Therefore during raster operation, it may be desirable to bypass the secondary projector to eliminate the further reduction in brightness which the secondary projector would otherwise impose on the image.

Although selected bypassing of the secondary projector may be achieved automatically as discussed above, a manually operable switch may be provided which can be operated by a viewer for bypassing the secondary projector or overriding automatic selection.

In the embodiment of the invention described in more detail below, the apparatus comprises a polarisation switch and a beam splitter and the polarisation switch controls the polarisation of light passing therethrough so that the beam splitter either directs light to the secondary projector or bypasses the secondary projector. The secondary projector filters image bearing light by absorbing the light or reflecting the light into a light dump. The holographic projector may be a Fourier projector comprising a Liquid Crystal on Silicon display or a Spatial Light Modulator. The secondary projector is a digital light processor.

In another aspect of the present invention, a method is provided for displaying an image including: illuminating a holographic projector with a substantially coherent light beam, phase modulating the light beam in accordance with image data input into the holographic projector, generating an image in accordance with the modulated light, and selectively directing the image generated upon the surface of a secondary projector which in a first selected arrangement filters unwanted light from the background of the image, and in a second selected arrangement bypasses said secondary projector.

Said secondary projector may be bypassed when ambient light conditions are high or during raster operation or when a viewer selects said second arrangement.

### Brief Description of the Drawings

In order that the invention may be more clearly understood reference will now be made to the accompanying drawings, given by way of example only, in which:
Figure 1 is a block diagram of a projection apparatus;
Figure 2 is a graph comparing displayed brightness of the projection apparatus shown in Figure 1 with a known projection apparatus; and
Figure 3 is a more detailed view of the projection apparatus shown in Figure 1.

### Detailed Description

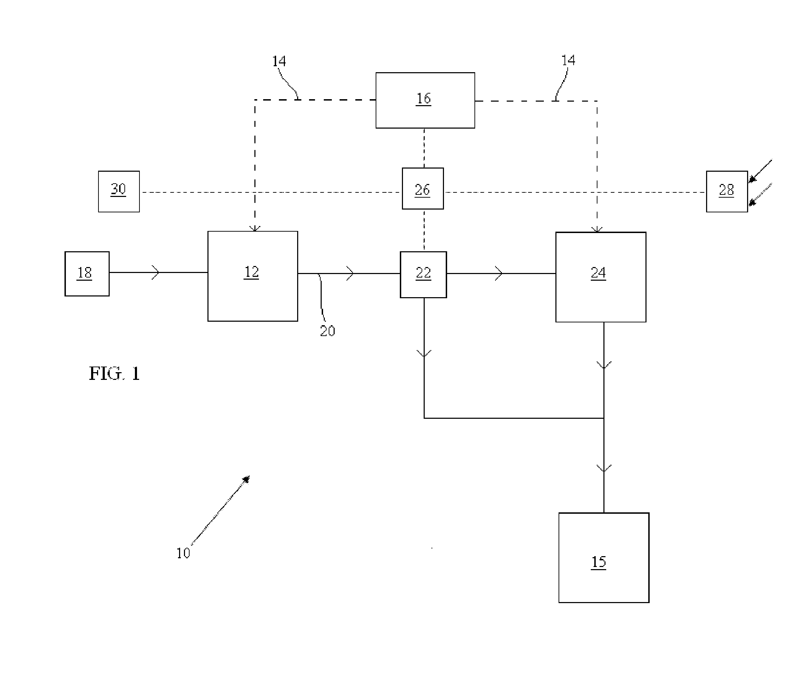

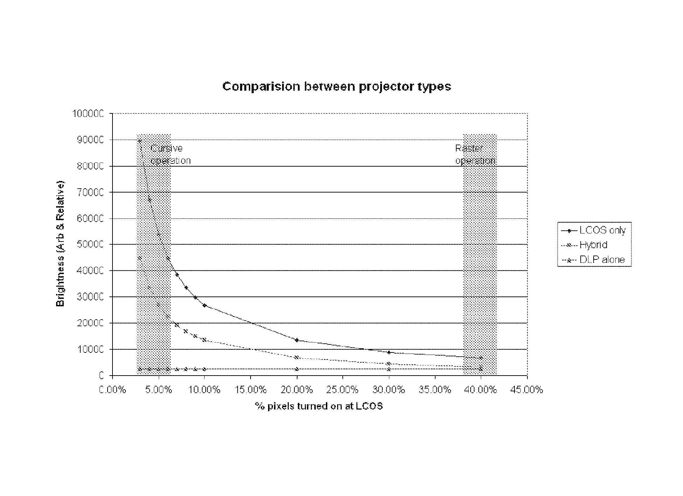

Referring to Figure 1, projection apparatus 10 is shown for use in a display unit. A holographic projector 12 receives image data 14 from a digital image processor 16 and generates a hologram for modulating the phase of light in accordance with the image data. The holographic projector may be a Fourier projector and comprise a Liquid Crystal on Silicon Display or a Spatial Light Modulator. A substantially coherent light source 18, such as a source of laser light, illuminates the holographic projector 12 for generating image bearing light 20.

A secondary projector 24 is arranged to be illuminated by the image bearing light 20 for filtering said image bearing light for improving contrast in a final image to be projected to a viewer. An optical switch 22 is operable to bypass the secondary projector so that in one condition of the switch light is filtered by the secondary projector and in a second condition of the switch light is not filtered by the secondary projector.

The hybrid arrangement of holographic projector and secondary projector may function in either one of at least two modes. In a first mode, image bearing light is generated by the holographic projector and the secondary projector acts as a mask for that image bearing light filtering unwanted light to improve contrast. In a second mode, the holographic projector is defocused by a selected amount so that light is directed to the secondary projector in the vicinity of the required image and the secondary projector forms the image bearing light from the selected backlight provided by the holographic projector.

When the secondary projector 24 is selected, the majority of light generated by the source 18 is directed onto the secondary projector in the vicinity of the required image and the secondary projector filters unwanted light improving contrast. In this way, the holographic projector acts as a focused backlight for the secondary projector and the secondary projector generates the image so that the two projectors complement each other exploiting the desirable properties of each whilst overcoming the disadvantages. When the secondary projector is not selected, the image is generated solely by the holographic projector and although contrast is reduced, brightness can be increased. The holographic projector may Whether filtered by the secondary projector or not light is output to a relay lens arrangement 15 of a display unit for display.

A switch control unit 26 is provided for controlling the optical switch 22. An ambient light sensor 28 senses ambient lighting conditions, for example lighting conditions of the outside world scene viewed by a viewer through the display. The control unit 26 is operably connected to the sensor 28 for receiving from the sensor data according to the ambient light. The control unit may comprise a processor and memory so the sensed data can be compared with stored data in the memory representative of high or low lighting conditions. Therefore the optical switch can be controlled to selectively bypass the secondary projector dependent on the sensed ambient light.

As the hybrid projector arrangement with both holographic projector and secondary projector is particularly suitable during low ambient lighting conditions for example when flying at night, the switch control unit 26 controls the optical switch to bypass the secondary projector when the sensed ambient light is high. Conversely, when the sensed ambient light is low the secondary projector is switched so that the apparatus adopts its hybrid condition. Preferably, the switch control unit has some hysteresis so that the secondary projector does not flicker in and out at cross-over ambient lighting conditions.

Figure 2 shows a comparison between different operative modes of the projector apparatus compared also with a known apparatus comprising only a digital light processor. The lines are labelled LCOS only, hybrid and DLP alone. The graph plots brightness in foot lamberts against the percentage pixels turned on at the LCOS.

The projection apparatus in a display unit is typically operated in one of the two highlighted regions. The cursive operation is operated with symbols alone which generally are arranged around an outer perimeter of the display. In cursive operation, only about 5% of the display area contains an image. Cursive operation is the main mode of operation. The raster operation is operated with video images which may include sequentially displayed images that represent buildings, or vehicles for example. In raster operation, about 40% of the display area contains an image.

In cursive operation, as is to be expected, the Fourier projector provides the greatest optical gain when compared with the DLP projector. Whilst the optical gain is reduced when a hybrid projection apparatus is adopted, the optical gain is substantially greater than using a DLP alone. In raster operation, the optical gain provided by the Fourier projector is reduced.

A standard, non Fourier display, typically is limited by entendue matching of the illumination to the projector surface, the uniform illumination requirements, no presence of optical gain and material loss of the system. Predominantly the lack of optical gain restricts the efficiency of the standard projector system (hence the brightness). Even with the combined material losses of the two projectors the optical gain from the Fourier - Hybrid projector still considerably exceeds the efficiency of a standard projector.

Accordingly, the switch control unit 26 may additionally or alternatively be configured for receiving data from the digital light processor according to whether a cursive or raster image is being displayed. The switch control unit controls the optical switch to selectively bypass the secondary projector during cursive operation and raster operation. Typically, the switch control unit controls the optical switch to bypass the secondary projector during raster operation.

In an alternative arrangement and because it is ultimately the perception of a viewer of the display whether the displayed image requires greater brightness or greater contrast, a manually operable switch 30 may be provided which a viewer can operate for switching in or switching out the secondary projector.

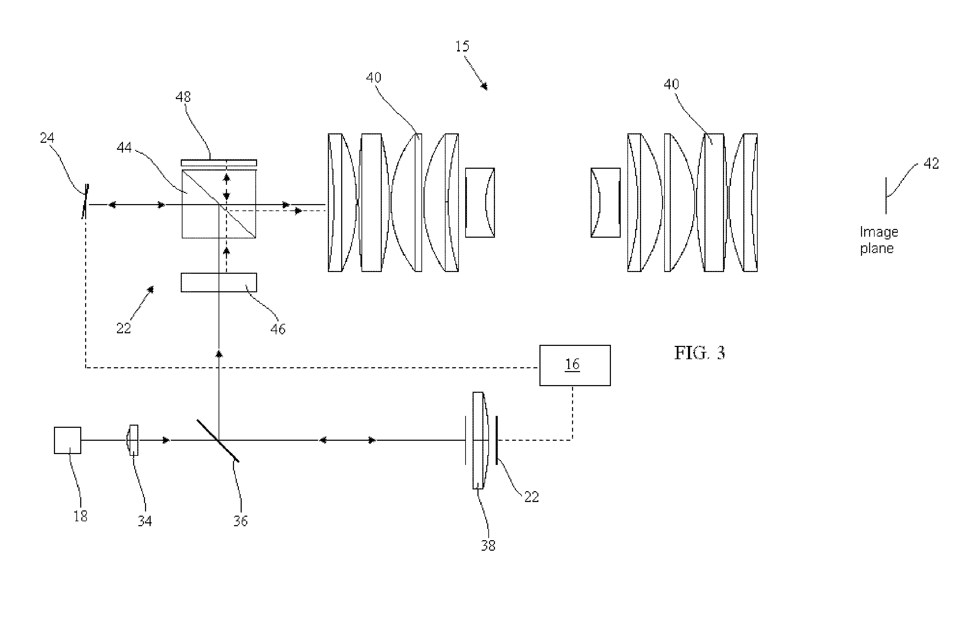

Figure 3 illustrates in more detail a projection apparatus according to one embodiment of the invention.

The laser source 18 generates light which passes through focussing lens 34 which expands the beam of light provided by the laser 18 to illuminate the holographic projector 12. The light expanded by the lens 34 passes through turning mirror 36. Lens 38 is located in front of the Fourier projector and either fully or partially collimates the rays of light onto the projector. As stated earlier the Fourier projector is commonly called an LCOS. It modulates the light from the light source to provide a hologram. The holographic projector and secondary projectors are driven by a digital signal processor 16 which inputs digital data for the displayed image as shown by broken lines in Figure 3.

The Fourier projector provides a high optical gain from the finite amount of laser light received from laser 18. That is, the laser light received is shared between only the pixels that are in an 'on' state that form the image. Although a large amount of optical gain is created the Fourier projector may also produce a significant amount of background noise which in the prior art appears in the final image as light in areas of the display in which no image is intended to be displayed.

The mirror 36 is arranged between the lenses 34 and 38 and is located to receive image bearing light from the Fourier projector and direct the light to switch 22. The switch 22 in a first condition directs the light to the secondary projector 24 for filtering and in a second condition bypasses the secondary projector.

The second projector 24 receives image data form the digital signal processor 16 which is representative of the image to be displayed and modifies the image bearing light received from the Fourier projector to remove unwanted light or background noise so that light transmitted from the second projector contains only that light required to generate the image on the display. The second projector either absorbs unwanted light or reflects unwanted light from the background of the image to a light dump or similar. In other words it acts as an optical filter to remove any unwanted light from the background of the image. By blanking out the areas where the image is not supposed to be the contrast in the final image is increased. The second projector may be any suitable matrix addressed device, for example, another LCOS, a liquid crystal display or a Digital Light Processor DLP. Although as shown the second projector is a reflective projector it could instead be a transmissive processor which allows only that light to pass therethrough necessary to reconstruct the image on the display.

The structure as depicted in Figure 4 has several advantages. The contrast is greatly improved as compared to the prior art, especially at low ambient light levels where the background noise generated by the Fourier projector can be more easily perceived by a viewer. However, the apparatus preserves the optical gain advantages of the Fourier projector but also offers very high contrast and resolution by combining the output of the Fourier projector with a separate "real input" projector such as a standard liquid crystal display or digital light processor (DLP).

A group of lenses 40 forms the optical relay arrangement 15 for relaying the image to a final image plane 42. It will be understood by those skilled in the art that any suitable elements may form the optical relay, or projection optics, of the design.

Switch 22 comprises in this arrangement a polarisation beam splitter 44, a polarisation switch 46 and a half wave plate 48.

The polarisation switch 46 is arranged between the mirror 36 and the polarisation beam splitter 44. The image bearing light generated by the Fourier projector is reflected by the turning mirror 36 so that it passes through the polarisation switch 46. The polarisation switch is arranged to either change the polarisation of light passing therethrough or leave the polarisation unchanged dependent on whether the second projector 24 is to be switched in or switched out. When the second projector is switched in, the polarisation of light emerging from the polarisation switch is such that it is reflected by the beam splitter 44 onto the second projector. The second projector serves to extract background noise from the image bearing light and reflects the modified light back through the beam splitter. The second projector changes the polarisation of the modified light so that it passes through the beam splitter to the imaging relay 15 for display at the image plane. When the second projector is switched in, contrast in the final displayed image is improved. When the second projector is switched out, the polarisation of light emerging from the polarisation switch 46 is such that it passes through the beam splitter. The polarisation of light passing through the beam splitter is changed by the half wave plate 48 and reflected back to the beam splitter. The beam splitter 44 reflects the light from the half wave plate towards the imaging relay for display at the image plane. When the second projector 24 is switched out losses of the system are reduced and it permits high raster brightness comparable to that of the standalone Fourier projector.

It will be appreciated that the polarisation switch and the beam splitter can be configured so that the polarisation of light is changed when the second projector is to be either switched in or switched out. Alternatively, the polarisation switch may change the polarisation of light in a first way when second projector is switched in and in a second way when the second projector is switched out.

In summary, if raster operation alone is the only mode of operation it may be desirable to increase the available optical gain by bypassing the second projector. Further, if the display is used in an aircraft, the ambient light conditions will vary between low light during night flights or very high light on a clear sunlit day or when the aircraft is flying above the cloud base in full sunlight. In low ambient light, an image on a display is easily visible with low optical gain but likewise background radiation is also visible. In this case, it is desirable to switch in the second projector to remove the background radiation particularly as the loss of brightness is not a problem. In high ambient light, an image on a display is not easily visible unless a high optical gain is generated by the projection apparatus. It is typically desirable to generate a display brightness of around 1500 to 3000 foot lamberts for instance when flying above clouds in full sunlight. Equally though background radiation which is at much lower brightness levels than the image displayed is not easily perceived. Therefore, in high ambient light, it is desirable to switch out the second projector to increase the optical gain generated by the projection apparatus particularly as loss of contrast is not a problem.

The invention has been described above with respect to preferred embodiments. It will be understood by those skilled in the art that changes and modifications may be made thereto without departing from the scope of the invention as set out in the appended claims.

## Claims

1. Projection apparatus for use in a display unit, including:
a holographic projector for receiving image data from a digital image processor and generating a hologram for modulating the phase of light in accordance with said image data;
a substantially coherent light source for illuminating the holographic projector for generating light in accordance with the image data;
a secondary projector arranged to filter light from the holographic projector for improving contrast in a final image to be projected to a viewer; and
an optical switch which is operable to bypass the secondary projector so that in a first condition of the switch light is filtered by the secondary projector and in a second condition of the switch light is not filtered by the secondary projector.

2. Projection apparatus as claimed in claim 1, comprising a switch control unit operably connected to the switch for controlling the optical switch to selectively bypass the secondary projector.

3. Projection apparatus as claimed in claim 2, comprising an ambient light sensor, wherein said switch control unit is operably connected to the sensor for receiving from the sensor data according to the ambient light, and controlling the optical switch to selectively bypass the secondary projector dependent on the sensed ambient light.

4. Projection apparatus as claimed in claim 3, wherein said switch control unit controls the optical switch to bypass the secondary projector when said sensed ambient light is high.

5. Projection apparatus as claimed in any of claims 2 to 4, wherein the switch control unit is configured for receiving data according to whether a cursive or raster image is being displayed, and controlling the optical switch to selectively bypass the secondary projector during cursive operation and raster operation.

6. Projection apparatus as claimed in claim 5, wherein said switch control unit controls the optical switch to bypass the secondary projector during raster operation.

7. Projection apparatus as claimed in any of the preceding claims, comprising a manually operable switch which can be operated by a viewer for bypassing the secondary projector.

8. Projection apparatus as claimed in any of the preceding claims, wherein the holographic projector is defocused by a selected amount providing a programmable backlight for image bearing light generated by the secondary projector.

9. Projection apparatus as claimed in any of claims 1 to 7, wherein the holographic projector is arranged to generate image bearing light which is masked by the secondary projector for improving contrast

10. Projection apparatus as claimed in any of the preceding claims, wherein said holographic projector and secondary projector are operable in two modes in the first condition of the switch, and in a first mode the holographic projector is arranged to generate image bearing light which is masked by the secondary projector for improving contrast and in a second mode the holographic projector is defocused by a selected amount providing a programmable backlight for image bearing light generated by the secondary projector.

11. Projection apparatus as claimed in any of the preceding claims, wherein the optical switch comprises a polarisation switch and a beam splitter and the polarisation switch controls the polarisation of light passing therethrough so that the beam splitter either directs light to the secondary projector or bypasses the secondary projector.

12. Projection apparatus as claimed in any of the preceding claims, wherein the holographic projector is a Fourier projector comprising a Liquid Crystal on Silicon display or a Spatial Light Modulator.

13. A method of displaying an image including: illuminating a holographic projector with a substantially coherent light beam, phase modulating the light beam in accordance with image data input into the holographic projector, generating an image in accordance with the modulated light, and selectively directing the image generated upon the surface of a secondary projector which in a first selected arrangement filters unwanted light from the background of the image, and in a second selected arrangement bypasses said secondary projector.

14. A method as claimed in claim 14, wherein said secondary projector is bypassed when ambient light conditions are high or during raster operation or when a viewer selects said second arrangement.

15. A head mounted display, helmet mounted display or head up display comprising the projection apparatus as claimed in any of claims 1 to 12 or operating the method as claimed in claims 13 or 14.
